# EUROPÄISCHE PATENTSCHRIFT

(11) **EP 2 177 383 B1**
(45) Veröffentlichungstag und Bekanntmachung des Hinweises auf die Patenterteilung: **21.10.2015**
(21) Anmeldenummer: 09009464.0
(22) Anmeldetag: 22.07.2009
(51) Int. Cl.: B60G 17/052

(54) **Ventileinrichtung für eine Luftfederungsanlage**
Valve device for a pneumatic suspension assembly
Ensemble de clapets pour un système de suspension pneumatique

(30) Priorität: 14.10.2008 DE 102008051205
(43) Veröffentlichungstag der Anmeldung: 21.04.2010
(73) Patentinhaber: WABCO GmbH, 30453 Hannover (DE)
(72) Erfinder: Gorczyca, Sven, 30419 Hannover (DE); Risse, Rainer, 30982 Pattensen-Reden (DE); Stender, Axel, 31787 Hameln (DE); Weihe, Ulrich, 30826 Garbsen (DE)
(74) Vertreter: Lauerwald, Jörg

(56) Entgegenhaltungen:
- EP-A- 1 266 775
- EP-A- 1 382 469
- EP-A- 1 712 380
- WO-A-2009/039908
- DE-A1-102004 035 691
- DE-A1-102007 005 980
- DE-B3-102005 017 590
- DE-B3-102005 019 479

## Beschreibung

Die Erfindung betrifft eine Ventileinrichtung für eine Luftfederungsanlage in einem Fahrzeug gemäß den Merkmalen des Patentanspruchs 1.

Derartige Ventileinrichtungen dienen zur Steuerung der Druckluftmenge in Luftfederbälgen der Luftfederungsanlage. Eine Verringerung oder Erhöhung der Druckluftmenge in den Luftfederbälgen wird im Rahmen einer elektronischen Niveauregelung automatisch gemäß einem erkannten Regelungsbedarf von einer elektronischen Steuereinrichtung durchgeführt. Zusätzlich ist es erforderlich, beispielsweise beim Be- und Entladen eines Fahrzeuges, durch manuelle Betätigung die Druckluftmenge in den Luftfederbälgen zu erhöhen oder zu verringern, um das Fahrzeugniveau z. B. an das Niveau einer Laderampe anzupassen. Hierfür war es bisher üblich, separate Ventileinrichtungen für die elektronisch gesteuerte Niveauregelung und für die manuelle, willkürliche Niveauverstellung zu verwenden. Für die manuelle Verstellung sind bisher sogenannte Drehschieberventile weit verbreitet. Aus der DE 10 2004 035 691 A1 ist der Vorschlag bekannt, die von der elektronisch gesteuerten Niveauregelung verwendete Ventileinrichtung mit einer manuellen Betätigung zu kombinieren.

Der vorliegenden Erfindung liegt demgegenüber die Aufgabe zugrunde, eine kostengünstig konstruierte Ventileinrichtung der zuvor genannten Art anzugeben.

Diese Aufgabe wird durch die in dem Patentanspruch 1 angegebene Erfindung gelöst. Vorteilhafte Weiterbildungen der Erfindung sind in den Unteransprüchen angegeben.

EP1 712 380 A1 betrifft ein manuell betätigbares pneumatisches Schaltventil für Anlagen zum Heben und Senken eines Fahrzeugaufbaus über mindestens ein Luftfederelement. Es ist ein Steuerkolben in einer Stellung HEBEN oderSENKEN übereine Verriegelungseinheit verriegelbar. Beispielsweise für einen Roll-on-roll-off-Betrieb oder bei einem Transport eines Fahrzeugaufbaus mit der Bahn oder auf einem Schiff kann eine Verriegelung in der Stellung SENKEN vorteilhaft sein, während eine Verriegelung im Bereich einer Stellung HEBEN beim Be- und Entladen im Bereich einer Rampe von Vorteil sein kann.

EP 1 382 469 A2 offenbart ein Magnetventil für Nutzfahrzeuge mit Luftfederung mit mindestens zwei Anschlüssen, eine Spule und einen in der Spule geführten Anker, der mit einem Ventilkörper verbunden ist, der über die Bewegung des Ankers gegenüber mindestens einem dem Ventilkörper zugeordneten Ventilsitz steuerbar ist, wobei der Anker entsprechend dem Durchmesser des Ventilsitzes druckentlastet ausgebildet ist. Ein manuell betätigbarer Stößel ist zum willkürlichen Betätigen des zwischen dem Ventilkörper und dem Ventilsitz gebildeten Ventils vorgesehen.

Sofern im Rahmen dieser Anmeldung von Elementen wie z.B. einem Luftfederbalg, einem Druckluftanschluss oder einer Druckluftleitung in der Einzahl gesprochen wird, schließt dies eine Mehrzahl solcher Elemente mit ein, wie z.B. eine Anordnung von Luftfederbälgen, Druckluftanschlüssen oder Druckluftleitungen.

Die erfindungsgemäße Ventileinrichtung hat den Vorteil, kostengünstig herstellbar zu sein. Dies wird insbesondere durch die Art des Aufbaus mit relativ wenigen Einzelteilen ermöglicht. Ein weiterer Vorteil ist, dass die Ventileinrichtung schnell und einfach montierbar ist, was sie ebenfalls kostengünstig macht. Ein weiterer Vorteil der Erfindung besteht darin, dass die manuelle Bedienung relativ komfortabel und ergonomisch möglich ist, da nur ein manuelles Bedienelement vorgesehen ist, das in verschiedene Richtungen betätigbar ist. Ein weiterer Vorteil der Erfindung besteht in der Verwendung eines mechanischen Steuerelements, das als einzelnes gemeinsames Steuerelement sowohl die Betätigungswünsche von dem manuellen Bedienelement als auch von einem nicht-manuellen Betätigungselement auf die Ventilanordnung transferiert.

Das nicht-manuelle Betätigungselement kann vorteilhaft durch eine Vielzahl von möglichen Betätigungsenergien betätigbar sein. Beispielsweise ist es vorteilhaft, das nicht-manuelle Betätigungselement elektrisch betätigbar oder pneumatisch betätigbar auszubilden. Im Falle der Ausbildung als elektrisch betätigbares Betätigungselement kann die Betätigung direkt auf elektrische Weise, z. B. durch einen Elektromagneten, erfolgen, der direkt mechanisch auf das mechanische Steuerelement einwirkt. Im Fall der pneumatischen Betätigung kann ein Pneumatik-Druck beispielsweise direkt auf eine als pneumatische Wirkfläche ausgebildete Seite des mechanischen Steuerelements einwirken. Gemäß einer vorteilhaften Weiterbildung kann das mechanische Steuerelement mit einem in einer Druckluftkammer angeordneten Kolben verbunden sein, der bei Druckluftbeaufschlagung der Druckluftkammer das mechanische Steuerelement bewegt. Hierdurch kann insbesondere die Druckluftkammer zweiteilig ausgebildet sein, so dass eine Bewegung des mechanischen Steuerelements durch Druckluftbeaufschlagung sowohl in die eine als auch in die andere Richtung möglich ist.

Es ist ebenfalls vorteilhaft, die elektrische und die pneumatische Betätigung zu kombinieren zu einer elektropneumatischen Betätigung. In diesem Fall weist das nicht-manuelle Betätigungselement ein elektromagnetisch betätigbares pneumatisches Ventil auf, welches einen sogenannten Vorsteuerdruck auf das pneumatisch betätigbare Betätigungselement ausgibt und hierüber eine Bewegung des mechanischen Steuerelements bewirkt.

Gemäß einer vorteilhaften Weiterbildung der Erfindung ist das mechanische Steuerelement über einen Betätigungsknopf manuell betätigbar. Dieser kann vorteilhaft mechanisch derart von dem mechanischen Steuerelement entkoppelt sein, dass der Betätigungsknopf den von dem nicht-manuellen Betätigungselement, also z.B. von dem elektrischen Betätigungssignal, ausgelösten Bewegungen des mechanischen Steuerelements nicht oder nicht vollständig folgt. Dies hat den Vorteil, dass etwaige Irritationen durch eine automatisch ausgelöste Bewegung des Betätigungsknopfs bei Bedienungspersonen vermieden werden können. Es ist vorteilhaft, den Betätigungsknopf mit einem Totweg zu versehen, der wenigstens doppelt so groß ist wie der maximale Hub des mechanischen Steuerelements.

Gemäß einer vorteilhaften Weiterbildung weist die Ventileinrichtung eine Rasteinrichtung auf, mittels der das manuelle Bedienelement in wenigstens einer Stellung verrastbar ist. Hierdurch kann der Bedienkomfort der Ventileinrichtung bei manueller Bedienung weiter erhöht werden. Es ist insbesondere möglich, in der Heben-Stellung (der Luftfederbalg wird mit Druckluft befüllt) und/oder der Senken-Stellung (Druckluft wird aus dem Luftfederbalg abgelassen) verrastbar zu machen. Hierdurch muss das manuelle Bedienelement während des Heben-und/oder des Senken-Vorgangs nicht vom Bediener permanent festgehalten werden, was zu einer Zeiteinsparung beim Be- und Entladen eines Fahrzeuges führt.

Gemäß einer vorteilhaften Weiterbildung ist die Verrastung durch die Rasteinrichtung mittels einer elektrisch betätigbaren Entriegelungseinrichtung aufhebbar. Hierdurch kann einer versehentlichen Nicht-Rückstellung des Betätigungsknopfs aus der Senken- oder Heben-Stellung entgegengewirkt werden, indem z. B. die für die Niveauregelung vorgesehene elektronische Steuereinrichtung bei Bedarf automatisch die Verrastung aufheben kann, etwa wenn das Fahrzeug fährt und eine Anpassung des Fahrniveaus durch die Niveauregelung erforderlich ist. Entriegeln lässt sich das mechanische Steuerelement durch eine rein elektrische oder eine elektro-pneumatische Betätigung in die gegenüber der vorherigen manuellen Betätigungsrichtung entgegengesetzt Richtung, so dass das manuelle Bedienelement wieder in die Nullstellung überführt wird.

Die Erfindung wird nachfolgend anhand von Zeichnungen anhand von Ausführungsbeispielen näher erläutert.

Es zeigen
- Fig. 1: eine zweikreisige Luftfederungsanlage in schematischer Darstellung unter Verwendung der erfindungsgemäßen Ventileinrichtung und
- Fig. 2: eine erste Ausführungsform der erfindungsgemäßen Ventileinrichtung in Schnittdarstellung und
- Fig. 3: ausschnittsweise eine zweite Ausführungsform der erfindungsgemäßen Ventileinrichtung in Schnittdarstellung.

In den Figuren werden gleiche Bezugszeichen für einander entsprechende Teile verwendet.

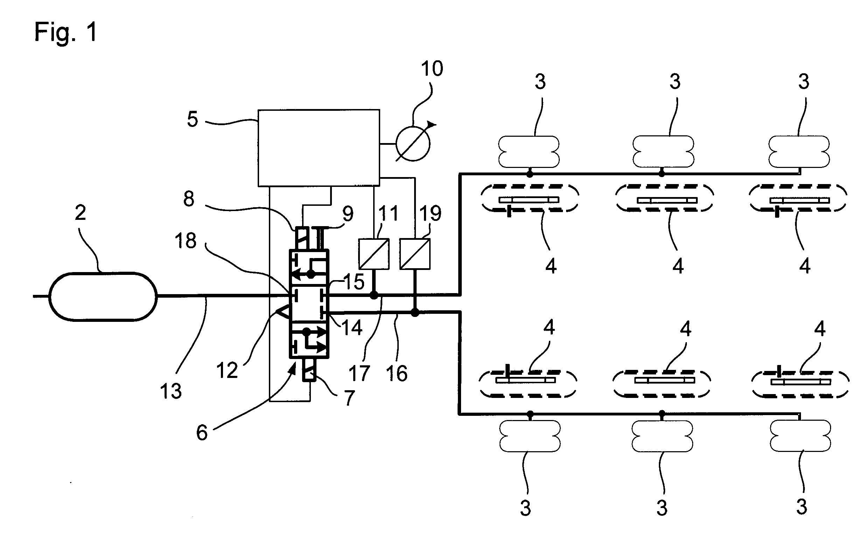

Fig. 1 zeigt in schematischer Darstellung den Aufbau einer zweikreisigen Luftfederungsanlage in einem dreiachsigen Fahrzeug. Das Fahrzeug weist Räder (4) auf, die paarweise an jeweiligen Fahrzeugachsen angeordnet sind. Der Fahrzeugaufbau ist über Luftfederbälge (3) gegenüber den Fahrzeugachsen gefedert. Die Luftfederbälge (3) sind jeweils in der Nähe der Radaufhängung der Räder (4) angeordnet. Über die Luftfederbälge (3) kann die Niveaulage des Fahrzeugaufbaus gegenüber den Rädern (4) in bestimmten Grenzen verändert werden. Die Luftfederungsanlage gemäß Fig. 1 ist zweikreisig ausgebildet, d.h. sie weist einen Druckluftkreis für die rechte Fahrzeugseite und einen weiteren Druckluftkreis für die linke Fahrzeugseite auf. Die Druckluftkreise weisen je drei Luftfederbälge (3) auf, die an jeweilige pneumatische Leitungen (16, 17) angeschlossen sind. Die Leitungen (16, 17) sind mit pneumatischen Anschlüssen (14, 15) einer Ventileinrichtung (6) der erfindungsgemäßen Art verbunden. Ein pneumatischer Anschluss (18) der Ventileinrichtung (6) ist wiederum über eine pneumatische Leitung (13) mit einem Druckluftvorrat verbunden. Der Druckluftvorrat ist im Ausführungsbeispiel der Fig. 1 als Druckluft-Vorratsbehälter (2) dargestellt. Bei Fahrzeugen mit eigener Druckluftversorgung ist der Druckluft-Vorratsbehälter (2) üblicherweise noch mit der Druckluftversorgungsanlage, d. h. mit einem Kompressor, einem Lufttrockner und einem Mehrkreisschutzventil, verbunden.

Die Ventileinrichtung (6) weist ferner einen Entlüftungsanschluss (12) auf, über den Druckluft in die Atmosphäre entlassen werden kann.

Die Ausführung der Luftfederungsanlage als zweikreisige Anlage hat den Vorteil, dass die Wankstabilität des Fahrzeugs erhöht werden kann, da Ausgleichsströmungen der Druckluft zwischen der linken und der rechten Fahrzeugseite verhindert werden.

Die Ventileinrichtung (6) ist durch elektrische Betätigungssignale über Magnetventile (7, 8) betätigbar. Zusätzlich ist die Ventileinrichtung (6) über ein manuelles Bedienelement (9) betätigbar. Die Magnetventile (7, 8) sind über elektrische Leitungen mit einer elektronischen Steuereinrichtung (5) verbunden.

Die elektronische Steuereinrichtung (5) dient zur automatischen, elektronisch gesteuerten Niveauregelung des Fahrzeugaufbaus. Zu diesem Zweck ist an die elektronische Steuereinrichtung (5) ein Wegsensor (10) angeschlossen, der üblicherweise am Fahrzeugrahmen, der Teil des Fahrzeugaufbaus ist, montiert ist und über einen mechanischen Sensierarm den jeweiligen Abstand zum Fahrwerk, d. h. zu den Achsen des Fahrzeugs, sensiert. Des Weiteren sind zwei Drucksensoren (11, 19) mit dem elektronischen Steuergerät (5) verbunden. Die Drucksensoren (11, 19) sind pneumatisch mit den Leitungen (16, 17) verbunden und sensieren den Druck in den zwei Druckluftkreisen der Luftfederungsanlage. Die Sensoren (10, 11, 19) geben die sensierten Informationen als elektrische Signale an die elektronische Steuereinrichtung (5) ab, die diese Signale verarbeitet und hieraus gemäß vorgegebenen Algorithmen entsprechende Ansteuersignale für die Magnetventile (7, 8) erzeugt.

Die elektronische Steuereinrichtung (5) kann beispielsweise ein ABS- (Anti-Blockier-System) oder EBS- (Elektronisch gesteuertes Bremssystem) Steuergerät sein. Das Steuergerät (5) ist dann über elektrische Leitungen mit Drehgeschwindigkeitssensoren verbunden, die in der Nähe der Räder (4) angeordnet sind und die Drehgeschwindigkeiten der Räder (4) erfassen. Das Steuergerät (5) wertet diese Drehgeschwindigkeitssignale aus.

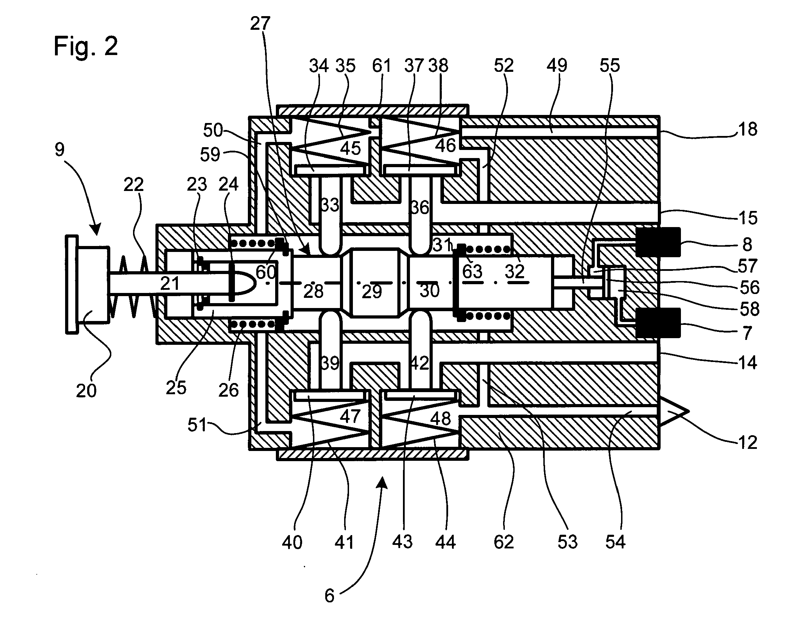

Die Ventileinrichtung (6) dient einerseits zur Regelung und Konstanthaltung des Fahrzeugniveaus im Rahmen der elektronischen Niveauregelung durch die elektronische Steuereinrichtung (5). Die Ventileinrichtung (6) dient außerdem einer manuellen Veränderung der Niveaulage des Fahrzeugs, die von der durch die elektronische Steuereinrichtung (5) vorgegebenen Soll-Niveaulage abweicht. Eine solche manuelle Veränderung ist beispielsweise beim Be- oder Entladen des Fahrzeuges an einer Laderampe erforderlich. Für die manuelle Veränderung der Niveaulage ist an der Ventileinrichtung (6) ein Bedienelement (9) vorgesehen. Das Bedienelement (9) kann beispielsweise als Betätigungshebel einer Ventileinrichtung mit Drehbetätigung oder als Bedienknopf (gemäß Fig. 2) ausgestaltet sein. Das Bedienelement (9) gemäß Fig. 1 symbolisiert daher alle Arten manueller Bedienelemente.

Die Ventileinrichtung (6) kann manuell und mittels elektrischer Betätigung in die Stellungen Heben, Senken und Neutral gestellt werden. Mit dem Begriff "Stellung" wird im Rahmen dieser Patentanmeldung die Stellung, d.h. die Funktion, der Ventileinrichtung (6) bezeichnet. Mit der eingestellten Position des Bedienelements (9) korrespondieren bestimmte Stellungen der Ventileinrichtung (6), wobei je nach Ausführungsart für das Bedienelement (9) bestimmte weitere Positionen vorgesehen sein können.

In der Stellung Heben wird Druck aus dem Druckluft-Vorratsbehälter (2) in die Luftfederbälge (3) geleitet. In der Stellung Senken wird Luft aus den Luftfederbälgen (3) über den Entlüftungsanschluss (12) in die Atmosphäre entlassen. In der Stellung Neutral erfolgt keine Änderung der Druckluftmenge in den Luftfederbälgen (3).

In der Fig. 2 ist eine erste vorteilhafte Ausführungsform der erfindungsgemäßen Ventileinrichtung (6) schematisch dargestellt.

Die Ventileinrichtung (6) weist ein in einem Gehäuse (62) angeordnetes mechanisches Steuerelement (27) auf. Das mechanische Steuerelement (27) ist als länglicher Kolben ausgebildet, der in einer Bohrung des Gehäuses (62) angeordnet ist und darin geführt wird. Der Kolben (27) weist einen ersten Abschnitt (25) auf, daran angrenzend einen zweiten Abschnitt (28) mit geringerem Durchmesser, hieran wiederum angrenzend einen dritten Abschnitt (29) mit größerem Durchmesser im Vergleich zum zweiten Abschnitt (28), sowie einen an den dritten Abschnitt (29) angrenzenden vierten Abschnitt (30) mit wiederum verringertem Durchmesser. Der Übergang zwischen dem dritten Abschnitt (29) und den benachbarten zweiten und vierten Abschnitten (28, 30) ist im Wesentlichen konisch ausgebildet. Der Kolben (27) stützt sich über eine erste Feder (26), einen ersten Ring (60) sowie einen Sprengring (59) an seiner einen Seite gegenüber dem Gehäuse (62) ab. Auf der anderen Seite des Kolbens (27) stützt sich dieser über eine zweite Feder (32), einen weiteren Ring (63) sowie einen weiteren Sprengring (31) gegenüber der gegenüberliegenden Seite des Gehäuses (62) ab. Sofern auf den Kolben (27) keine weiteren Kräfte einwirken, wird dieser durch die zuvor beschriebenen Federanordnungen in einer mittleren Lage gehalten, die der Neutralstellung der Ventileinrichtung (6) entspricht.

Die Ventileinrichtung (6) weist eine Ventilanordnung (34, 37, 40, 43) auf, die im vorliegenden Ausführungsbeispiel aus vier 2/2-Wegeventilen gebildet wird, die beispielhaft als Plattenventile dargestellt sind. Die Plattenventile weisen jeweils eine Ventilplatte (34, 37, 40, 43) auf, die mit einem durch eine Gehäusekante gebildeten Ventilsitz in Kontakt steht und im geschlossenen Zustand jeweilige Ventilkammern (45, 46, 47, 48) gegenüber den Anschlüssen (14, 15) der Ventileinrichtung (6) abdichtet. Die Plattenventile werden durch Schließfedern (35, 38, 41, 44), die in den jeweiligen Kammern (45, 46, 47, 48) angeordnet sind, im unbetätigten Zustand in ihrer geschlossenen, abdichtenden Stellung gehalten. Die Schließfedern (35, 38, 41, 44) stützen sich auf eine Gehäuseabdeckung (61), beispielsweise in Form eines Ringes oder hohlen Zylinders oder hohlen Quaders, die mit dem Gehäuse (62) verbunden ist, ab. Die Plattenventile weisen jeweilige Betätigungsstößel (33, 36, 39, 42) auf, die mit dem Kolben (27) in Kontakt stehen. Bei einer Auslenkung des Kolbens aus der in der Fig. 2 dargestellten Mittelstellung, derart, dass der einen größeren Durchmesser aufweisende Abschnitt (29) mit jeweiligen Betätigungsstößeln in Kontakt kommt, bewirkt ein Öffnen des jeweiligen Plattenventils mittels des jeweiligen, mit dem Abschnitt (29) in Kontakt befindlichen Betätigungsstößels (33, 36, 39, 42).

Die Plattenventile (34, 40) haben die Funktion von Einlassventilen. Ihre jeweiligen Ventilkammern (45, 47) stehen über Druckluftkanäle (49, 50, 51) mit dem Druckluftvorratsanschluss (18) der Ventileinrichtung (6) in Verbindung. Bei einem Öffnen der Plattenventile (34, 40) strömt Druckluft von dem Druckluft-Vorratsbehälter (2) über die Druckluftleitung (13) zu dem Anschluss (18), und von dort aus über die Druckluftkanäle (49, 50, 51) sowie die geöffneten Plattenventile (34, 40) zu den Druckluftanschlüssen (14, 15) und von dort aus über die Druckluftleitungen (16, 17) in die Luftfederbälge (3). Dabei können die Druckluftkanäle (50, 51) als ein Druckluftkanal ausgeführt sein.

Die Plattenventile (37, 43) dienen als Auslassventile. Sie stehen über Druckluftkanäle (52, 53, 54) mit dem Entlüftungsanschluss (12) in Verbindung. Bei einer Betätigung der Plattenventile (37, 43) über die Stößel (34, 42) öffnen diese und geben die Verbindung zwischen den Druckluftanschlüssen (14, 15) und dem Entlüftungsanschluss (12) frei. Hierdurch wird Druckluft aus den Luftfederbälgen (3) in die Atmosphäre entlüftet. Dabei können die Druckluftkanäle (52, 53) als ein Druckluftkanal ausgeführt sein.

Die Ventileinrichtung (6) weist als manuelles Bedienelement (9) einen Betätigungsknopf (20) auf, der auf einer Achse (21) befestigt ist. Der Betätigungsknopf (20) wird über eine Haltefeder (22) gegenüber dem Gehäuse (62) in einer Neutralstellung gehalten. Die Haltefeder (22) wirkt sowohl als Druck- als auch als Zugfeder, d. h. sie ist in der Neutralstellung des Betätigungsknopfes (20) kraftfrei. Die Achse (21) ist ins Innere des Gehäuses (62) geführt und endet in einer Bohrung des ersten Abschnitts (25) des Kolbens (27). Ungefähr an dem dem Betätigungsknopf (20) abgewandten Ende der Achse (21) ist ein Sprengring (24) in einer Nut der Achse (21) befestigt. Der erste Abschnitt (25) weist an seinem dem Betätigungsknopf (20) zugewandten Ende einen in einer Innennut des ersten Abschnittes (25) angeordneten weiteren Sprengring (23) auf, der einen kleineren Innendurchmesser aufweist als der Außendurchmesser des Sprengrings (24).

Bei einem manuellen "Ziehen" an dem Betätigungsknopf (20), d. h. einer manuellen Betätigung, die von dem Gehäuse (62) fortweist, kommt der Sprengring (24) in Kontakt mit dem Sprengring (23) und nimmt den Kolben (27) dann entgegen der Kraft der Feder (26) in Betätigungsrichtung des Betätigungsknopfes (20) mit. Hierdurch kann der Kolben (27) manuell derart ausgelenkt werden, dass der dritte Abschnitt (29) des Kolbens (27) in Kontakt mit den Stößeln (33, 39) kommt und dann infolge des Öffnens der Plattenventile (34, 40) einen Druckluftzufluss in die Luftfederbälge (3) erlaubt. Die Ventileinrichtung (6) befindet sich dann in der Stellung Heben.

Bei einem "Drücken" des Betätigungsknopfes (20), d. h. der entgegengesetzten manuellen Betätigungsbewegung, kommt das dem Betätigungsknopf (20) abgewandte Ende der Achse (21) in Kontakt mit dem Boden der in dem ersten Abschnitt (25) des Kolbens (27) vorgesehenen Bohrung und nimmt dann den Kolben (27) entgegen der Kraft der Feder (32) in dieser Betätigungsrichtung mit. Bei ausreichender manueller Betätigung kommt dann der dritte Abschnitt (29) in Kontakt mit den Stößeln (36, 42), wodurch die Plattenventile (37, 43) geöffnet werden und einen Druckluftfluss von den Luftfederbälgen (3) zur Atmosphäre freigeben. Die Ventileinrichtung (6) befindet sich dann in der Stellung Senken.

Als nicht-manuelles Betätigungselement (7, 8, 55, 56, 57, 58) weist die Ventileinrichtung (6) in der Ausführungsform gemäß Fig. 2 ein erstes und ein zweites Magnetventil (7, 8) der anhand der Fig. 1 erläuterten Art auf, die hier schematisch dargestellt sind. Die Magnetventile sind mit dem Druckluft-Vorratsbehälter (2) verbunden. Sie haben die Funktion, Druckluft von dem Vorratsbehälter (2) in eine der Kammern (57, 58) zu leiten bzw. aus diesen Kammern wiederum in die Atmosphäre zu entlassen. In den Kammern (57, 58) ist ein Steuerkolben (56) verschieblich angeordnet. Der Steuerkolben steht über eine Achse (55) mechanisch mit dem Kolben (27) in Verbindung. Bei einer Druckluftbeaufschlagung der ersten Kammer (58) über das Magnetventil (7) verschiebt sich der Steuerkolben (56) in Richtung des Betätigungsknopfes (20) und nimmt dabei den Kolben (27) in dieser Richtung mit. Hierdurch wird, analog zu der zuvor beschriebenen manuellen Betätigung, der Abschnitt (29) in Kontakt mit den Stößeln (33, 39) gebracht und die Ventileinrichtung mithin in die Stellung Heben gestellt. Bei einer Druckluftbeaufschlagung der Kammer (57) durch das zweite Magnetventil (8) wird der Steuerkolben (56) in entgegengesetzter Richtung bewegt, nimmt den Kolben (27) mit und bringt dadurch den Abschnitt (29) in Kontakt mit den Stößeln (36, 42). Die Ventileinrichtung (6) wird hierdurch in die Stellung Senken gestellt.

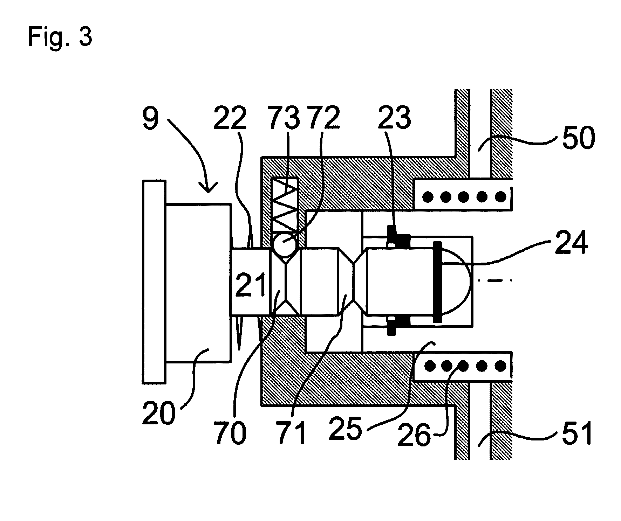

In der Fig. 3 ist eine zweite Ausführungsform der erfindungsgemäßen Ventileinrichtung (6) ausschnittsweise dargestellt, und zwar der Bereich der Ventileinrichtung (6), der das manuelle Bedienelement (9) aufweist. Im Übrigen entspricht die hier beschriebene Ventileinrichtung (6) der Ausführungsform der Ventileinrichtung (6) gemäß Fig. 2.

Die Ventileinrichtung (6) gemäß Fig. 3 weist eine Rasteinrichtung (72, 73) auf, mittels der das manuelle Bedienelement (9) in wenigstens einer Stellung verrastbar ist. Im vorliegenden Beispiel sind zwei Raststellungen dargestellt, nämlich die Stellungen Heben und Senken. Die Rasteinrichtung weist ein Rastelement (72) auf, das über eine Feder (73) gegenüber der Achse (21) vorgespannt ist und mit dieser Achse in Kontakt steht. Das Rastelement (72) kann vorteilhaft als Kugel ausgebildet sein. Die Achse (21) weist zwei Vertiefungen (70, 71) auf. Die Vertiefungen können vorteilhaft als umlaufende Nuten, z. B. mit im Wesentlichen konischem Profil, in der Achse (21) ausgebildet sein. Bei einem Betätigen des Betätigungsknopfes (20) in eine der Stellungen Heben oder Senken rastet die Kugel (72) in eine der Nuten (70, 71) ein und fixiert das manuelle Bedienelement (9) in der jeweiligen Stellung. Die Haltefeder (22) ist derart ausgelegt, dass die Haltekraft der Rasteinrichtung (72, 73) nicht überwunden wird.

In einer vorteilhaften Ausgestaltung der Erfindung ist die Rasteinrichtung (72, 73) derart dimensioniert, dass ihre Haltekraft durch manuelle Betätigung des Betätigungsknopfes (20) und/oder durch die Betätigung des nicht-manuellen Betätigungselements (7, 8, 55, 56, 57, 58) überwunden werden kann, so dass das mechanische Steuerelement (27) in die gegenüber der vorherigen Betätigungsrichtung entgegen gesetzte Richtung bewegt und in die Nullstellung gebracht wird. Hierdurch kann die Ventileinrichtung (6) ohne weiteres in eine andere Stellung gebracht werden, insbesondere ohne die Notwendigkeit, für die Rasteinrichtung eine spezielle Entriegelungseinrichtung vorzusehen. Die Rasteinrichtung kann hierfür durch geeignete Auswahl und Dimensionierung der Feder (73) sowie durch geeignete Wahl des Profils und der Schrägen der Nuten (70, 71) entsprechend dimensioniert werden.

Gemäß einer vorteilhaften Weiterbildung der Erfindung kann zur Aufhebung der Verrastung durch die Rasteinrichtung (72, 73) eine elektrisch betätigbare Entriegelungseinrichtung vorgesehen sein. Die Entriegelungseinrichtung kann vorteilhaft nach Art der in der Patentanmeldung DE 10 2007 045 012.7 beschriebenen Art ausgebildet sein.

## Patentansprüche

1. Ventileinrichtung (6) für eine Luftfederungsanlage in einem Fahrzeug, wobei die Ventileinrichtung
a) Anschlüsse (14, 15) für einen Luftfederbalg (3) der Luftfederungsanlage sowie einen Anschluss (18) für einen Druckluftvorrat (2) aufweist,
b) einen mit der Atmosphäre verbundenen Entlüftungsanschluss (12) aufweist,
c) ein manuelles Bedienelement (9, 20) aufweist,
d) ein nicht-manuelles Betätigungselement (7, 8, 55, 56, 57, 58) aufweist,
e) eine Ventilanordnung (34, 37, 40, 43) aufweist, mittels der die Anschlüsse (14, 15) für einen Luftfederbalg (3) mit dem Druckluftvorratsanschluss (18) oder dem Entlüftungsanschluss (12) verbindbar sind,
f) ein mechanisches Steuerelement (27) aufweist, das auf die Ventilanordnung (34, 37, 40, 43) derart einwirkt,
l) dass durch Verstellung des mechanischen Steuerelements (27), sowohl mittels des manuellen Bedienelements (9, 20) als auch mittels des nicht-manuellen Betätigungselements (7, 8, 55, 56, 57, 58), die Ventilanordnung (34, 37, 40, 43) die Anschlüsse (14, 15) für einen Luftfederbalg (3) sowohl mit dem Druckluftvorratsanschluss (18) oder dem Entlüftungsanschluss (12) verbinden kann als auch gegenüber diesen Anschlüssen (12, 18) absperren kann.

2. Ventileinrichtung nach Anspruch 1, **dadurch gekennzeichnet, dass** die Ventilanordnung (34, 37, 40, 43) einzelne Ventile aufweist, die mechanisch von dem mechanischen Steuerelement (27) betätigbar sind.

3. Ventileinrichtung nach einem der vorhergehenden Ansprüche, **dadurch gekennzeichnet, dass** das nicht-manuelle Betätigungselement (7, 8, 55, 56, 57, 58) ein elektrisch betätigbares Betätigungselement aufweist.

4. Ventileinrichtung nach dem vorhergehenden Anspruch, **dadurch gekennzeichnet, dass** das elektrisch betätigbare Betätigungselement (7, 8, 55, 56, 57, 58) wenigstens einen Elektromagneten (7, 8) aufweist.

5. Ventileinrichtung nach einem der vorhergehenden Ansprüche, **dadurch gekennzeichnet, dass** das nicht-manuelle Betätigungselement (7, 8, 55, 56, 57, 58) ein pneumatisch betätigbares Betätigungselement aufweist.

6. Ventileinrichtung nach wenigstens einem der vorhergehenden Ansprüche, **dadurch gekennzeichnet, dass** das mechanische Steuerelement (27) durch Druckluftbeaufschlagung betätigbar ist.

7. Ventileinrichtung nach dem vorhergehenden Anspruch, **dadurch gekennzeichnet, dass** das mechanische Steuerelement (27) mit einem in einer Druckluftkammer (57, 58) angeordneten Kolben (56) verbunden ist, der bei Druckluftbeaufschlagung der Druckluftkammer (57, 58) das mechanische Steuerelement (27) bewegt.

8. Ventileinrichtung nach einem der vorhergehenden Ansprüche, **dadurch gekennzeichnet, dass** das mechanische Steuerelement (27) über einen Betätigungsknopf (20) manuell betätigbar ist.

9. Ventileinrichtung nach dem vorhergehenden Anspruch, **dadurch gekennzeichnet, dass** der Betätigungsknopf (20) mechanisch derart von dem mechanischen Steuerelement (27) entkoppelt ist, dass der Betätigungsknopf (20) den von dem nicht-manuellen Betätigungselement (7, 8, 55, 56, 57, 58) ausgelösten Bewegungen des mechanischen Steuerelements (27) nicht oder nicht vollständig folgt.

10. Ventileinrichtung nach dem vorhergehenden Anspruch, **dadurch gekennzeichnet, dass** der Betätigungsknopf (20) einen Totweg aufweist, der wenigstens doppelt so groß ist, wie der maximale Hub des mechanischen Steuerelements (27).

11. Ventileinrichtung nach einem der vorhergehenden Ansprüche, **dadurch gekennzeichnet, dass** eine Rasteinrichtung (72, 73) vorgesehen ist, mittels der das manuelle Bedienelement (9, 20) in wenigstens einer Stellung verrastbar ist.

12. Ventileinrichtung nach dem vorhergehenden Anspruch, **dadurch gekennzeichnet, dass** die Verrastung durch eine elektrisch betätigbare Entriegelungseinrichtung aufhebbar ist.

13. Ventileinrichtung nach einem der vorhergehenden Ansprüche, **dadurch gekennzeichnet, dass** sich die Verrastung durch eine nicht-manuelle, insbesondere eine elektrische und/oder eine elektro-pneumatische, Betätigung in die entgegen gesetzte Richtung lösen lässt.

## Claims

1. Valve device (6) for a pneumatic suspension system in a vehicle, the valve device having
a) connectors (14, 15) for a pneumatic spring bellows (3) of the pneumatic suspension system and a connector (18) for a compressed air supply (2),
b) a ventilating connector (12) which is connected to atmosphere,
c) a manual operating element (9, 20),
d) a non-manual actuating element (7, 8, 55, 56, 57, 58),
e) a valve arrangement (34, 37, 40, 43), by means of which the connectors (14, 15) for a pneumatic spring bellows (3) can be connected to the compressed air supply connector (18) or the ventilating connector (12),
f) a mechanical control element (27) which acts on the valve arrangement (34, 37, 40, 43) in such a way
I) that, by way of adjustment of the mechanical control element (27), both by means of the manual operating element (9, 20) and by means of the non-manual actuating element (7, 8, 55, 56, 57, 58), the valve arrangement (34, 37, 40, 43) can both connect the connectors (14, 15) for a pneumatic spring bellows (3) to the compressed air supply connector (18) or the ventilating connector (12) and can shut off with respect to the said connectors (12, 18).

2. Valve device according to Claim 1, **characterized in that** the valve arrangement (34, 37, 40, 43) has individual valves which can be actuated mechanically by the mechanical control element (27).

3. Valve arrangement according to either of the preceding claims, **characterized in that** the non-manual actuating element (7, 8, 55, 56, 57, 58) has an electrically actuable actuating element.

4. Valve device according to the preceding claim, **characterized in that** the electrically actuable actuating element (7, 8, 55, 56, 57, 58) has at least one electromagnet (7, 8).

5. Valve device according to one of the preceding claims, **characterized in that** the non-manual actuating element (7, 8, 55, 56, 57, 58) has a pneumatically actuable actuating element.

6. Valve device according to at least one of the preceding claims, **characterized in that** the mechanical control element (27) can be actuated by way of compressed air loading.

7. Valve device according to the preceding claim, **characterized in that** the mechanical control element (27) is connected to a piston (56) which is arranged in a compressed air chamber (57, 58) and moves the mechanical control element (27) when the compressed air chamber (57, 58) is loaded with compressed air.

8. Valve device according to one of the preceding claims, **characterized in that** the mechanical control element (27) can be actuated manually via an actuating button (20).

9. Valve device according to the preceding claim, **characterized in that** the actuating button (20) is decoupled mechanically from the mechanical control element (27) in such a way that the actuating button (20) does not follow or does not completely follow the movements of the mechanical control element (27) which are triggered by the non-manual actuating element (7, 8, 55, 56, 57, 58).

10. Valve device according to the preceding claim, **characterized in that** the actuating button (20) has an idle travel which is at least twice as great as the maximum stroke of the mechanical control element (27).

11. Valve device according to one of the preceding claims, **characterized in that** a latching device (72, 73) is provided, by means of which the manual operating element (9, 20) can be latched in at least one position.

12. Valve device according to the preceding claim, **characterized in that** the latching action can be cancelled by way of an electrically actuable unlocking device.

13. Valve device according to one of the preceding claims, **characterized in that** the latching action can be released by way of a non-manual, in particular an electric and/or electropneumatic, actuation in the opposite direction.

## Revendications

1. Ensemble de clapets (6) pour un système de suspension pneumatique dans un véhicule, pour lequel l'ensemble de clapets comporte
a) des raccords (14, 15) pour une membrane de ressort pneumatique (3) du système de suspension pneumatique ainsi qu'un raccord (18) pour une réserve d'air comprimé (2),
b) un raccord de purge (12) raccordé à l'atmosphère,
c) un élément de commande manuel (9, 20),
d) un élément d'actionnement non manuel (7, 8, 55, 56, 57, 58),
e) un agencement de clapets (34, 37, 40, 43) au moyen duquel les raccords (14, 15) pour une membrane de ressort pneumatique (3) peuvent être reliés au raccord de réserve d'air comprimé (18) ou au raccord de purge (12),
f) un élément de commande mécanique (27) qui agit sur l'agencement de clapets (34, 37, 40, 43) de telle sorte
I) qu'en déplaçant l'élément de commande mécanique (27), tant au moyen de l'élément de commande manuel (9, 20) qu'au moyen de l'élément d'actionnement non manuel (7, 8, 55, 56, 57, 58), l'agencement de clapets (34, 37, 40, 43) peut aussi bien relier les raccords (14, 15) pour une membrane de ressort pneumatique (3) au raccord de réserve d'air comprimé (18) ou au raccord de purge (12) que également les raccords vis-à-vis de ceux-ci (12, 18).

2. Ensemble de clapets selon la revendication 1, **caractérisé en ce que** l'agencement de clapets (34, 37, 40, 43) comporte des clapets individuels qui peuvent être actionnés mécaniquement par l'élément de commande mécanique (27).

3. Ensemble de clapets selon l'une quelconque des revendications précédentes, **caractérisé en ce que** l'élément d'actionnement non manuel (7, 8, 55, 56, 57, 58) comporte un élément d'actionnement pouvant être actionné électriquement.

4. Ensemble de clapets selon la revendication précédente, **caractérisé en ce que** l'élément d'actionnement pouvant être commandé électriquement (7, 8, 55, 56, 57, 58) comporte au moins un électroaimant (7, 8).

5. Ensemble de clapets selon l'une quelconque des revendications précédentes, **caractérisé en ce que** l'élément d'actionnement non manuel (7, 8, 55, 56, 57, 58) comporte un élément d'actionnement pouvant être actionné pneumatiquement.

6. Ensemble de clapets selon au moins une quelconque des revendications précédentes, **caractérisé en ce que** l'élément de commande mécanique (27) peut être actionné par application de l'air comprimé.

7. Ensemble de clapets selon l'une quelconque des revendications précédentes, **caractérisé en ce que** l'élément de commande mécanique (27) est relié à un piston (56) disposé dans une chambre d'air comprimé (57, 58) qui déplace l'élément de commande mécanique (27) lors de la sollicitation de l'air comprimé de la chambre d'air comprimé (57, 58).

8. Ensemble de clapets selon l'une quelconque des revendications précédentes, **caractérisé en ce que** l'élément de commande mécanique (27) peut être actionné manuellement par un bouton de commande (20).

9. Ensemble de clapets selon l'une quelconque des revendications précédentes, **caractérisé en ce que** le bouton de commande (20) est mécaniquement découplé de l'élément de commande mécanique (27) de telle manière que le bouton de commande (20) ne suit pas ou pas complètement les mouvements de l'élément de commande mécanique (27) déclenchés par l'élément d'actionnement non manuel (7, 8, 55, 56, 57, 58).

10. Ensemble de clapets selon la revendication précédente, **caractérisé en ce que** le bouton de commande (20) comporte une course morte qui est au moins le double de la course maximale de l'élément de commande mécanique (27).

11. Ensemble de clapets selon l'une quelconque des revendications précédentes, **caractérisé en ce qu'**un dispositif à crans (72, 73) est prévu au moyen duquel l'élément de commande manuel (9, 20) peut être enclenché au moins dans une position.

12. Ensemble de clapets selon l'une quelconque des revendications précédentes, **caractérisé en ce que** l'enclenchement peut être supprimé par un dispositif de déverrouillage pouvant être actionné électriquement.

13. Ensemble de clapets selon l'une quelconque des revendications précédentes, **caractérisé en ce que** l'enclenchement peut être débloqué dans la direction opposée par un actionnement non manuel, en particulier électrique et/ou électropneumatique.
